# EUROPEAN PATENT SPECIFICATION

(11) **EP 1 469 330 B1**
(45) Date of publication and mention of the grant of the patent: **25.09.2013**
(21) Application number: 03731834.2
(22) Date of filing: 24.01.2003
(51) Int. Cl.: G02B 6/12, H05B 3/10, G02B 7/00

(54) **TEMPERATURE CONTROL ELEMENT, TEMPERATURE CONTROL COMPONENT, AND WAVEGUIDE OPTICAL MODULE**
"TEMPERATUR REGEL ELEMENT, TEMPERATUR REGEL KOMPONENTE UND OPTISCHES WELLENLEITER MODUL"
ELEMENT DE REGULATION DE TEMPERATURE, COMPOSANT DE REGULATION DE TEMPERATURE ET MODULE DE GUIDE D'ONDE OPTIQUE

(30) Priority: 24.01.2002 JP 2002015930
(43) Date of publication of application: 20.10.2004
(73) Proprietor: IBIDEN CO., LTD., Ogaki-shi, Gifu 503-0917 (JP)
(72) Inventor: MORI, Mikio, IBIDEN CO., LTD., Ibi-gun, Gifu 501-0601 (JP); SAKAMOTO, Hajime, IBIDEN CO., LTD., Ibi-gun, Gifu 501-0601 (JP); ITO, Yasutaka, IBIDEN CO., LTD., Ibi-gun, Gifu 501-0601 (JP)
(74) Representative: Grünecker, Kinkeldey, Stockmair & Schwanhäusser
(86) International application number: PCT/JP2003/000636
(87) International publication number: WO 2003/062878

(56) References cited:
- JP-A- 2000 075 152
- JP-A- 2000 075 152
- JP-A- 2001 033 643
- JP-A- 2001 083 340
- JP-A- 2002 148 499
- US-A- 5 917 272

## Description

### Field of the Invention

The present invention relates to a temperature control element and temperature controller used for controlling the temperature of an optical waveguide having a temperature-dependent characteristic and a waveguide type optical module in which the temperature controller or temperature control element is installed.

### Background Art

The conventional waveguide type optical module, especially, the quartz-array waveguide type optical module with a wavelength multi/demultiplexing function, uses a waveguide having a temperature-dependent wavelength demultiplexing characteristic. The waveguide type optical module of this type needs a temperature control of the waveguide for maintaining a required wavelength demultiplexing characteristic. Also an optical modulator or an optical switch, whose refractive index is adjusted by changing the temperature for the optical deflection, should have the temperature thereof adjusted for the refractive index not to vary. Both of these requires a temperature controller for adjusting the temperature of the optical waveguide.

Such a temperature controller is known from the disclosure in JP-A-2001-116936. The disclosed temperature controller is used in a quartz-array waveguide type optical module in which a heater is provided on a plate, which appears as a ceramic substrate, whose thermal expansion coefficient is 5 ppm/°C or less and thermal conductivity is 100 W/m·K, the plate is held on a pedestal and an optical waveguide is formed on the plate.

The conventional waveguide type optical module is designed only for providing a temperature controller made of a material having a small thermal expansion coefficient and a good thermal conductivity. Therefore, the temperature distribution is not homogeneous over the surface of the plate as the temperature control element. Thus, the waveguide inevitably incurs a distortion and has the wavelength demultiplexing characteristic thereof degraded.

### Disclosure of the Invention

The present invention has a primary object to overcome the above-mentioned drawbacks of the related art by providing a waveguide type optical module having a good wavelength demultiplexing characteristic.

The present invention has another object to provide a temperature controller and temperature control element for use in the waveguide type optical module showing a highly homogeneous plate-surface temperature distribution.

To overcome the drawbacks of the related art, the Inventors of the present invention made many experiments and researches and found that when the area of contact between the pedestal and plate was too large (32% or more), the temperature distribution was not homogeneous in some places on the surface of the temperature control element. When the contact area is simply reduced, the plate will be warped or distorted, leading to impossibility of an homogeneous plate-surface temperature distribution, and rather a trouble will take place. On this account, the Inventors decided to increase the contact area to flatten the plate first and adjust the surface roughness of the area of contact between the pedestal and plate or interpose a heat insulator between the pedestal and plate in order to overcome the problem of the inhomogeneous temperature distribution on the plate.
(1) The above object can be attained by providing a temperature control element including a plate having a heater or heat absorber provided on a non-heating side thereof or buried therein, wherein:
   the total area of contact between a pedestal provided to support the plate in air thereon in contact with mainly the non-heating side and the plate including the heater or heat absorber is over 30% of the area of the non-heating side of the plate; and
   the sum of surface roughness Ra2 of the plate and heater or heat absorber at a portion where it is in contact with the pedestal and that at the side of the plate at the pedestal side is over 0.05 µm.
(2) Also the above object can be attained by providing a temperature controller including a temperature control element and a pedestal to support the temperature control element thereon inside a casing, wherein:
   the temperature control element includes a plate having a heater or heat absorber provided on the non-heating side thereof or buried therein;
   the total area of contact between a pedestal provided thereon in contact with mainly the non-heating side, and the plate including the heater or heat absorber, is over 30% of the area of the non-heating side of the plate; and
   the sum of surface roughness Ra1 of the pedestal at a portion where it is in contact with the plate and heater or heat absorber and surface roughness Ra2 of the plate and heater or heat absorber at a portion where it is in contact with the pedestal is over 0.05 µm.
(3) Also the above object can be attained by providing a waveguide type optical module in which a temperature control element is supported in air on a pedestal inside a casing and an optical waveguide is mounted on the temperature control element, wherein:
   the temperature control element includes a plate having a heater or heat absorber provided on the non-heating side thereof or buried therein;
   the total area of contact between a pedestal provided thereon in contact with mainly the non-heating side and the plate including the heater or heat absorber is over 30% of the area of the non-heating side of the plate; and
   the sum of surface roughness Ra1 of the pedestal at a portion where it is in contact with the plate and heater or heat absorber and surface roughness Ra2 of the plate and heater or heat absorber at a portion where it is in contact with the pedestal is over 0.05 µm.
(4) Also the above object can be attained by providing a temperature control element including a plate having a heater or heat absorber provided on the non-heating side thereof or buried therein, wherein:
   a pedestal provided to support the plate thereon in contact with mainly the non-heating side and plate are superposed one on the other with a thermal insulation laid between them; and
   the sum of area of contact between the pedestal, and the plate including the heater or heat absorber and superposed on the pedestal with the thermal insulation laid between them, is over 30% of the area of the non-heating side of the plate.
(5) Also the above object can be attained by providing a temperature controller including a temperature control element and a pedestal provided to support the plate thereon inside a casing, wherein:
   the temperature control element includes a plate having a heater or heat absorber provided on a non-heating side thereof or buried therein;
   the pedestal mainly in contact with the non-heating side of the plate and the plate are superposed one on the other with a thermal insulation laid between them; and
   the sum of area of contact between the pedestal, and the plate including the heater or heat absorber and superposed on the pedestal with the thermal insulation laid between them, is over 30% of the area of the non-heating side of the plate.
(6) Also the above object can be attained by providing a waveguide type optical module in which a temperature control element is supported in air on a pedestal inside a casing and an optical waveguide is mounted on the temperature control element, wherein:
   the temperature control element includes a plate having a heater or heat absorber provided on the non-heating side thereof or buried therein;
   the pedestal mainly in contact with the non-heating side of the plate and the plate are superposed one on the other with a thermal insulation laid between them; and
   the sum of area of contact between the pedestal, and the plate including the heater or heat absorber and superposed on the pedestal with the thermal insulation laid between them, is over 30% of the area of the non-heating side of the plate.

Note that according to the present invention, the pedestal should preferably support the plate in contact with the edge and/or end face of the plate at the non-heating side, and the plate should preferably be formed from ceramics.

According to the present invention, the temperature control element has the heater or heat absorber provided on the non-heating side (rear side) surface of the plate or buried in the plate. Thus, the temperature control element has a function to elevate or lower the temperature of the plate appropriately. Also, since the plate can also function as a heat dispersion plate, it can effectively prevent the temperature distribution from being caused to be inhomogeneous because of the shape of the heater or heat absorber.

Further, since the total area of contact between the plate including the heater or heat absorber and the pedestal supporting the plate from below is more than 30% of the area of the non-heating side (rear side) of the plate to increase the supporting area, the plate itself will not be distorted or warped due to its own weight. Therefore, the flatness (warping) of the plate can be less than 50 µm, and thus even if the optical waveguide is mounted on the plate, the element will not have the optical axis thereof displaced by inclination or incur large propagation loss of light.

However, in case the sum of the area of contact between the pedestal for supporting and heater or heat absorber and that between the pedestal and plate is more than 30%, the heat of the plate will easily be conducted to the pedestal, so that the temperature distribution over the plate (heating plate) will rather be considerably inhomogeneous.

On this account, according to the present invention, the surfaces of the plate and heater (heat absorber) and the surface of the pedestal are roughened to prevent any easy heat conduction, or the thermal insulation is laid between the plate and heater and the pedestal to prevent the heat from being dissipated from the contact between the plate and pedestal in order to attain both the flatness (warping) of the plate and homogeneous temperature distribution over the plate surface.

As apparent from the above description of the present invention, on the assumption that the surface roughness of portions of the plate and heater or heat absorber which are in contact with the pedestal is Ra1 and that of the surfaces of plate and heater or heat absorber which are in contact with the pedestal is Ra2, the surface roughness is controlled and also the sum of Ra1 and Ra2 is made more than 0.05 µm.

Namely, the surface roughness of the portions in contact with each other is increased to limit the heat propagation due to a heat conduction through a solid thing, whereby the heat dissipation is limited to overcome the inhomogeneous plate-surface temperature distribution.

In this respect, in case an optical waveguide is supported in air in an optical part, the plate and pedestal are normally mirror-finished (Ra = 0.01) by polishing to assure a flatness of them, and Ra1 + Ra2 is about 0.02 µm. If the plate and pedestal are mirror-finished, however, the heat is easily propagated to the pedestal for dissipation, which will spoil the homogeneity of the temperature distribution over the plate surface. That is, the present invention is featured by the fact that the heat dissipation from the pedestal is prevented and also a cooling spot is prevented from taking place on the plate.

Another feature of the present invention lies in that the pedestal and plate are superposed one on the other with the thermal insulation laid between them at the contact between them. That is, as having previously been described, in case the sum of the area of contact between the pedestal and heater or heat absorber and that between the pedestal and plate is over 30%, the heat of the plate is easily conducted to the pedestal, which will lead to an inhomogeneous temperature distribution over the plate. On this account, according to the present invention, the thermal insulation is interposed between the plate and pedestal instead of the above-mentioned surface roughness control, in order to prevent the heat conduction from the plate toward the pedestal and assure a homogeneous temperature distribution over the plate.

According to the present invention, the plate is supported on the pedestal in contact with the edge thereof. With this manner of supporting, any temperature deviation will not easily take place in the central portion of the plate on which the waveguide is mounted.

Also, the plate abutting the pedestal is supported on the pedestal in contact with the edge thereof as well as in contact with the end face thereof. Thus, the end face of the plate will not be exposed to a fluidic atmosphere like air, and so the heat will not be dissipated to the atmosphere, and the heat conduction from the plate edge can be blocked.

Note that in case the pedestal is formed like a circular or square frame (cylinder or square column) and thus has a space defined inside thereof, air can be stayed in this space to store the heat, thereby effectively prevent any inhomogeneous temperature distribution from taking place.

These objects and other objects, features, and advantages of the present invention will become more apparent from the following detailed description of the preferred embodiments of the present invention when taken in conjunction with the accompanying drawings. It should be noted that the present invention is not limited to the embodiments but can freely be modified without departing from the scope and spirit thereof defined in the claims given later.

### Brief Description of the Drawings

FIG 1 is a plan view of one embodiment of the temperature controller according to the present invention.
FIG 2 is a sectional view of the pedestal shown in FIG. 1.
FIG 3 is a sectional side elevation of the temperature controller in FIG 1.
FIG 4 is a sectional front view of the temperature controller in FIG. 1.
FIG 5 is a sectional front view of a second embodiment of the temperature controller according to the present invention.
FIG 6 is also a sectional front view of a third embodiment of the temperature controller according to the present invention.
FIG 7 is a schematic plan view of a fourth embodiment of the temperature controller according to the present invention.
FIG 8 is a sectional view of an embodiment of the waveguide type optical module according to the present invention.
FIG 9 graphically illustrates the relation between the warping (flatness) and contact area ratio in an example 1.
FIG 10 graphically illustrates the relation between the surface roughness (Ra1 + Ra2) and ΔT in the example 1.
FIG. 11 graphically illustrates the relation between the surface roughness (Ra1 + Ra2) and ΔT in an example 2.
FIG 12 graphically illustrates the relation between the surface roughness (Ra1 + Ra2) and ΔT in an example 3.
FIG. 13 is a photo of the heating side of the heater in the example 1, taken by a thermo-viewer.

### Best Mode for Carrying Out the Invention

The present invention will be described herebelow concerning the embodiments thereof with reference to the accompanying drawings.

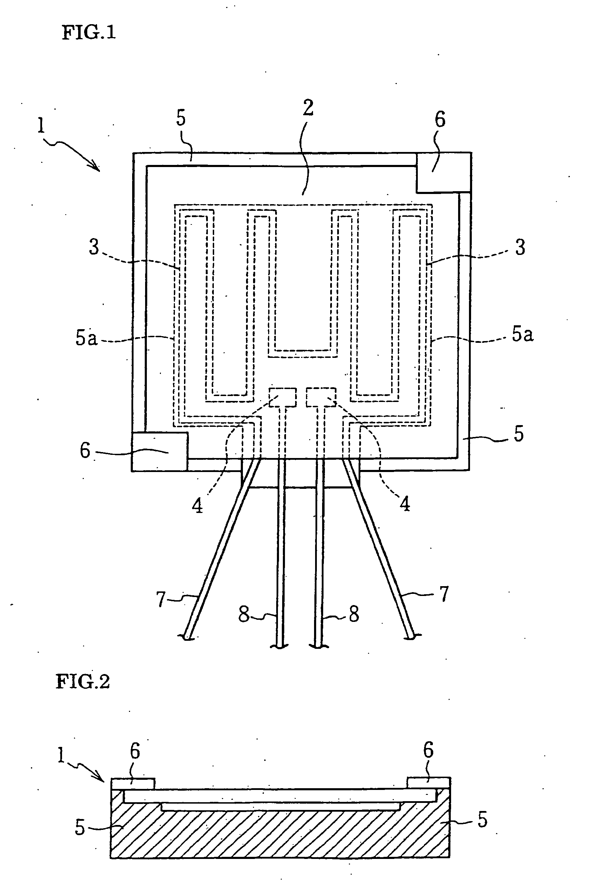

FIGS. 1 to 8 show an embodiment of each of the temperature control element, temperature controller and waveguide type optical module according to the present invention. Referring now to FIG. 1, there are illustrated_in the form of a plan view the temperature control element for use in the waveguide type optical module according to the present invention. The temperature control element is generally indicated with a reference 1. The temperature control element 1 includes a plate 2 and a heater 3 disposed on a side (non-heating side or rear side) opposite to a heating side of the plate 2 on which a waveguide is disposed. It should be noted however that a Peltier element as a heat absorber may be provided in place of the heater 3. Of course, the Peltier element has the functions of both the heater and heat absorber. Also, the heater or Peltier element may be provided in the plate element 3.

In the area (inner) of the plate 2 where the heater 3 is formed, there are provided pads 4 on which a thermistor chip and platinum resistance chip, used for measurement of a temperature, are mounted, heater power lead wires 7 for electrical connection with the pads 4, and thermistor lead wires 8, and a thermistor chip and platinum resistance chip are mounted on the pads 4 to measure a temperature for the purpose of temperature control.

The plate 2 may be formed from a metal plate, ceramic plate or resin plate. Examples of the metal plate include an aluminum plate, copper plate and the like. Examples of the ceramic plate may include more than one selected from among a nitride ceramics, carbide ceramics, oxide ceramics and carbon. For example, since the nitride ceramics and carbide ceramics are smaller in thermal expansion coefficient than the metal and considerably greater in mechanical strength than the metal, a thin ceramic plate will not be warped or distorted even when heated. Therefore, the plate 2 can be formed from a thin and lightweight ceramic plate. Further, such a ceramic plate is characterized in that the surface temperature thereof will quickly respond to a change in temperature of a resistance heater because of the high heat conductivity and small thickness of the ceramic plate. Therefore, the ceramic plate can advantageously have the surface temperature thereof controlled when changing the temperature of the resistance heater by changing the voltage or current supplied to the heater.

Note that the nitride ceramics may be aluminum nitride, silicon nitride, boron nitride, titanium nitride or the like, for example, and they may be used singly or more than two of them be used in combination. Also, it should be noted that the carbide ceramics may be silicon carbide, zirconium carbide, titanium carbide, tantalum carbide, tungsten carbide or the like, for example and they may be used singly or more than two of them be used in combination.

Among the above materials, the aluminum nitride is most preferable for forming the plate 2 because it has a highest heat conductivity as 180 W/m·K and it is outstanding in temperature response.

Also, since the ceramic used as a material for the plate 2 shows a small thermal expansion coefficient and has only a small difference in thermal expansion from a waveguide 12 even when the temperature becomes high, the waveguide 12 will not be broken and separated from the temperature control element (plate) 1.

Note that the plate 2 and heater (or heat absorber) 3 have the mean surface roughness Ra (Ra2) (defined in JIS B 0601) thereof adjusted by sand-blasting to more than 0.025 µm, and have, in relation with the pedestal, the sum including the surface roughness Ra1 of the pedestal adjusted to more than 0.05 µm.

At the center inside a casing 9, the plate 2 is supported on a pedestal 5 shaped like a square frame in contact on the rear-side edge thereof. As shown in FIGS. 1 to 4, the pedestal 5 is cut square at the top thereof to form a concavity for receiving the plate 2 and heater 3 therein. Namely, the pedestal 5 is thus cut to form a step 5a (in which the plate 2 is fitted at the edge thereof) which defines the concavity. The pedestal 2 is thus formed to have a frame-like shape. The pedestal 5 is countersunk except for the edge thereof so that the plate 2 is fitted on the step 5a and the upper surface of the plate 2 will be flush with the upper surface of the pedestal 5.

On the pedestal 5, there should preferably be formed a lead-in port for leading out the lead wires 7 for supplying power to the heater 3 or heat absorber and the lead wires 8 for supplying power to the thermistor chip. That is to say, all the edge of the plate 2 may not be in contact with the pedestal 5. It should be noted that the plate 2 should preferably be fixed with fixtures 6 to the pedestal 5.

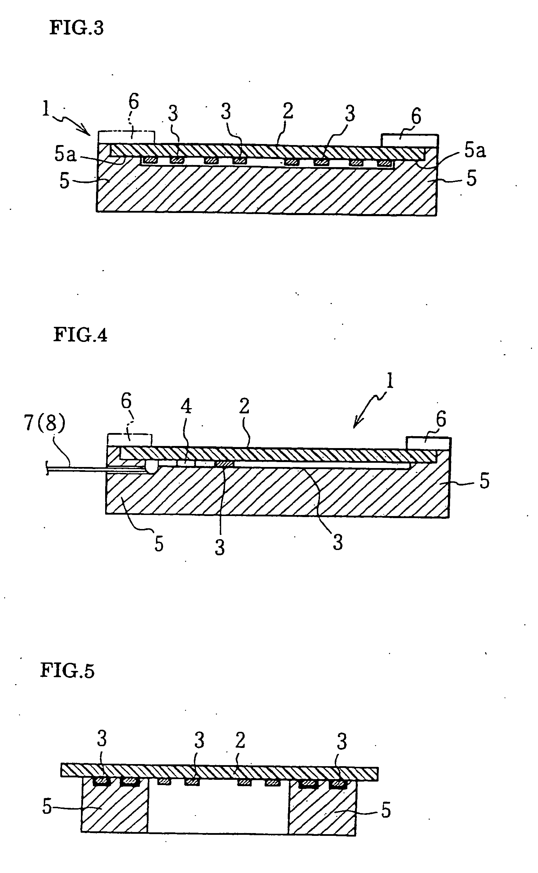

FIG 3 is an axial sectional view of the temperature controller. As shown, the temperature controller according to the present invention has the plate 2 wholly fixed by fitting in the concavity defined by the step 5a in the pedestal 5. The temperature controller of the aforementioned structure is supported on the pedestal 5 inside the casing 9.

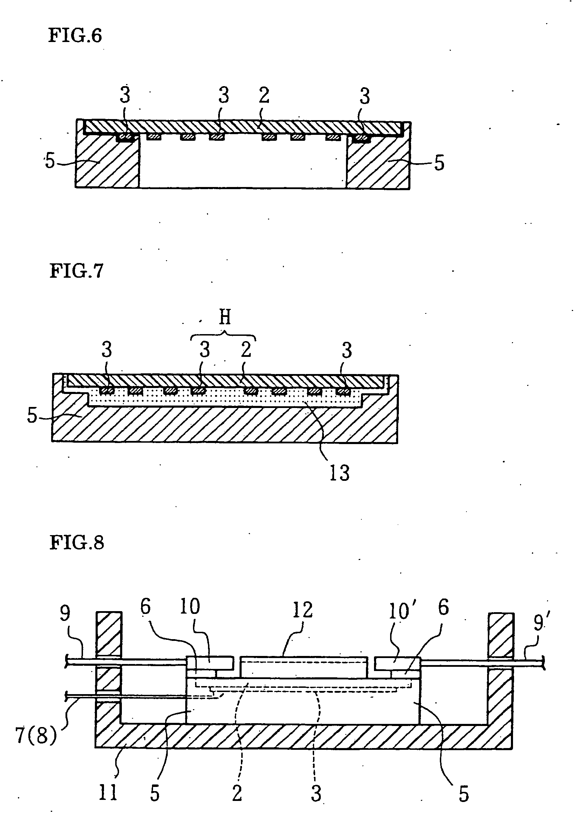

The pedestal 5 may be a square column which is hollow at the center thereof as shown in FIGS. 5 and 6. In this case, the pedestal 5 and plate 2 may be in such a relation that the plate 2 is supported in air on the pedestal 5 with only the lower side of the plate 2 or the edge of the plate 2 including the heater 3 (or heat absorber) formed on the lower side thereof being mounted on the step 5a formed in the pedestal 5. Also, the plate 2 may be supported on the pedestal 5 with the contact between them being in an area where the heater is wired, as shown in FIG. 5. In this case, it is necessary that the sum of the area of contact between the pedestal 5 and plate 2 and that between the heater (heat absorber) 3 and pedestal 5 should be over 30%.

In this case, however, the plate 2 should be supported on the pedestal 5 in contact with the edge thereof, which assures an excellent homogeneity of temperature distribution over the surface of the plate 2.

Also, since the plate 2 is fixed by fitting at the end face thereof as well to the step 5a formed in the upper portion of the frame-shaped pedestal 5, the end face of the plate 2 is not exposed to any fluidic atmosphere like air and the heat is stored with an improved efficiency, so that the heat will be distributed more homogeneously over the surface of the plate 2.

According to the present invention, the plate 2 included in the temperature control element 1 should desirably be about 0.1 to 10 mm. If the plate thickness exceeds 10 mm, the heat will be much stored in it, no homogeneity of plate-surface temperature distribution can be assured. On the other hand, if the thickness is less than 0.1 mm, the plate 2 will incur a similar temperature distribution to that of the heater or heat absorber. Namely, the plate-surface temperature distribution will not be homogeneous.

Note that the surface of the pedestal 5 which is in contact with the plate 2, heater 3 and the like has the mean surface roughness Ra (Ra1) (defined in JIS B 0601) thereof adjusted by sand-blasting to more than 0.025 µm, and have, in relation with the pedestal, the sum including the surface roughness Ra2 of the plate adjusted to more than 0.05 µm.

Therefore, according to the present invention, the total surface roughness (Ra1 + Ra2) of the contact surfaces of the rear side of the plate 2 (including the heater 3) and pedestal 5 has to be adjusted to more than 0.05 µm. Namely, since the roughness of the contact surfaces of both the plate 2 and pedestal 5 are large, the heat will not easily be conducted from one to the other, which will assure an excellent homogeneity of surface temperature distribution of the plate 2.

According to the present invention, the plate 2 may be supported on the pedestal 5 with a thermal insulation 13 being interposed at the contact between the temperature control element 1 and pedestal 5 as shown in FIG 7, instead of adjusting the surface roughness as mentioned above. In this case, the thermal insulation 13 will provide a heat resistance to limit the heat conduction from the plate 2 to the pedestal 5 and inhibit the heat dissipation from the edge of the plate 2, whereby a homogeneous temperature distribution can be maintained over the surface of the plate 2.

The thermal insulation 13 used in the present invention may be a rein or inorganic binder. For the resin, at least one or more should desirably be selected from epoxy, phenol, polyimide and silicone resins. For the inorganic binder, at least one or more should desirably be selected from silica sol and alumina sol. The resin and binder should preferably contain components which will improve the heat insulation, such as bubbles, fibers or the like.

The pedestal 5 is in contact with the rear side of the plate 2 as well as with the heater (or heat absorber) 3 and lateral face of the plate 2. The area of direct contact between the plate 2 and heater (or heat absorber) 3 and the pedestal 5 or indirect contact between them with the thermal insulation 13 interposed between them should be over 30% of the area of the non-heating side of the plate 2. As a result, the plate 2 itself will not be warped due to its own weight and its flatness (warping) can be limited to less than 50 µm. Thus, even with a waveguide 12 superposed over the temperature control element 1, it will not be inclined and so, misalignment of the optical axis will not cause any propagation loss of light.

The pedestal 5 may be formed from ceramic, metal or resin but the heat conductivity of such a material should desirably be less than 50 W/m·K which will not lead to any heat conduction-caused occurrence of an inhomogeneous temperature distribution on the plate. The ceramics may be an alumina, quartz, cordierite or the like. Also, even when a silicon carbide (SiC) or aluminum nitride (AIN), having a high heat conductivity, is used to form the pedestal 5, the heat conductivity can be lowered by processing this material into a porous one. The metal may be a one whose heat conductivity is low, such as a nickel (Ni) alloy. Further, the resin may be a glass epoxy or glass polyimide. In this case, the pedestal 5 is formed by punching and countersinking the resin substrate.

According to the present invention, the heater 3 may be formed on the non-heating side (rear side) of the plate 2 or buried in the plate 2. In case the heater 3 is formed buried in the plate 2, it should desirably be formed at a depth of less than 60% of the plate thickness from the side of the plate opposite to the heating side (far from the heating side). If it is buried at a depth of more than 60%, namely, if it is positioned too near to the heating side, the heat in the plate 2 will not sufficiently be dissipated, causing an inhomogeneous temperature distribution on the heating side.

In case the heater 3 is formed buried in the plate 2 as above, a plurality of heater layers may be provided. In this case, the pattern of each layer should desirably be such that a resistance heater is formed in any of the layers and each layer appears to include one resistance heater when viewed from the heating side of the plate 2. Such a pattern may be a zigzag layout, for example.

Note that the heater 3 may be buried in the plate 2 and partially exposed to outside the plate 2.

Note that in case the heater 3 is formed on the surface of the plate 2, it is preferable that a conductive paste containing metal particles should be applied to the surface of the plate 2 to form a conductive paste layer having a predetermined pattern, and then the conductive paste pattern be baked to sinter the metal particles on the plate surface. It should be noted that the metal sintering may be such that the metal particles, and the metal particles and ceramics, are welded to each other.

In case the heater 3 is buried in the plate 2, its thickness should preferably be within a range of 1 to 50 µm. When the heater 3 is to be formed on the surface of the plate 2, its thickness should preferably be within a range of 1 to 30 µm, and more preferably within a range of 1 to 10 µm.

In case the heater 3 is formed buried in the plate 2, its width should preferably be within a range of 5 to 20 µm. On the other hand, in case the heater 3 is formed on the surface of the plate 2, it should preferably have a width falling within a range of 0.1 to 20 mm, and more preferably within a range of 0.1 to 5 mm.

The heater 3 can be varied in resistance by changing its width and thickness. However, the aforementioned thickness and width are most practical ones. The smaller the thickness and width, the higher the resistance becomes. In this respect, when it is formed buried in the plate, the heater can be thicker and wider but the surface temperature distribution will be correspondingly inhomogeneous. In this case, it is necessary to design the heater which has an increased width. Also, since the heater is buried in the plate, no consideration has to be paid to the adherence to the nitride ceramics or the like, the heater 3 may be formed from a high melting-point metal such as tungsten, molybdenum or the like or a carbide such as a carbide of tungsten, molybdenum or the like, and thus the resistance of the heater 3 can be increased. Therefore, the heater 3 may be formed thick against breakage. Accordingly, the heater 3 should desirably be formed to have the aforementioned thickness and width.

With the heater being positioned as above, as the heat generated by the heater is propagated, it will be dispersed to the entire plate and the temperature will be distributed homogeneously over the side thereof heating the waveguide.

The heater may have a sectional form, either rectangular or elliptic but the section should desirably be flat since this form contributes to easier heat dissipation toward the heating side of the plate and a homogeneous temperature distribution on the heating side. Also, the material of the resistance heater is not limited to the conductive paste but it should preferably contain resin, solvent, thickener, etc. in addition to metal particles or conductive ceramics which add to an electro-conductivity of the heater.

The metal particles as a material of the heater 3 should desirably be a noble metal (such as gold, silver, platinum or palladium), lead, tungsten, molybdenum, nickel or the like. Among others, the material should more preferably be one of the noble metals (gold, silver, platinum and palladium). These metals may be used singly or in combination, but more than two of them should desirably be used in combination since they are not easily oxidizable and has a sufficient resistance for heat generation. The above-mentioned conductive ceramics include carbides of tungsten and molybdenum. These ceramics may be used singly or more than two of them be used in combination.

Also, the particle size of the metal or ceramic particles should preferably be within a range of 0.1 to 100 µm. If the size is less than 0.1 µm, the particles are easily oxidizable. On the other hand, the particles of more than 100 µm in size are not easy to sinter and have a higher resistance.

The metal particles may be either globular or squamate, or may include globular and squamate ones. The squamate or globular/squamate metal particles can hold metal oxide between them, and contribute to a positive adherence between the resistance heater and nitride ceramics or the like as well as to an increase resistance of the heater.

The resins usable to make the conductive paste includes include epoxy resin, phenol resin, etc., for example. Also, the solvent may be isopropyl alcohol or the like, for example. The thickener may be cellulose or the like. The conductive paste should desirably be formed by adding a metal oxide to metal particles and sintering the metal particles and metal oxide. By sintering the metal oxide along with the metal particles, the metal particles can be made to adhere to the nitride ceramics or carbide ceramics as the ceramic substrate. By mixing the metal oxide in the conductive paste in this way, the adherence of the paste to the nitride ceramics or carbide ceramics can be improved although the reason is not known exactly. Presumably, the surface of each metal particle and nitride or carbide ceramics is slightly oxidized to form an oxide film and thus the oxide films are integrated with each other via the metal oxide when the materials are sintered, so that the metal particles and nitride or carbide ceramics will adhere to each other.

The metal oxide should preferably be at least one selected from a group of lead oxide, zinc oxide, silica, boron oxide (B₂O₃), alumina, yttria and titania, for example. These oxides permits to improve the adherence between the metal particles and nitride or carbide ceramics without increasing the resistance of the resistance heater. When the total amount of the metal oxide is taken as 100% by weight, the amounts of the above-mentioned metal oxides, namely, lead oxide, zinc oxide, silica, boron oxide (B₂O₃), alumina, yttria and titania should desirably be adjusted to 1 to 10 % by weight, 1 to 30 % by weight, 5 to 50 % by weight, 20 to 70 % by weight, 1 to 10 % by weight, 1 to 50 % by weight and 1 to 50 % by weight, respectively, with the sum thereof being not over 100% by weight. By adjusting the amounts of these oxides within the above ranges, respectively, it is possible to improve the adherence of the metal particles, especially with the nitride ceramics.

The addition of the metal oxide to the metal particles should preferably be within a range over 0.1% by weight and under 10% by weight. Also, the heater may be formed from a metal foil or wire. The metal foil may be a nickel foil or stainless steel foil. It should desirably be etched to form a pattern of the resistance heater. The metal foils thus patterned may be attached to each other to form the resistance heater. The metal wire may be a tungsten or molybdenum wire, for example.

In case the heater is formed on the surface of the plate 2, a metal coating layer should desirably be formed on the surface of the heater in order to prevent the internal sintered metal from being oxidized and having the resistance thereof changed. The metal coating layer should preferably be 0.1 to 10 µm thick. The metal used to for the metal coating layer is not limited to any special one but it may be any metal which is non-oxidizable. More specifically, the metal may be gold, silver, palladium, platinum, nickel or the like, for example. These metals may be used singly or two or more of them be used in combination. Among others, nickel should preferably be used to form the metal coating layer.

The heater has to be connected to the lead wires 7 for connection to the power source. The connection is made by soldering or brazing. A heat absorber may be used instead of the heater. In this case, the heat absorber may be a Peltiert element. The Peltier element may be connected to the lead wires 7 with an adhesive or any physical means such as screw or spring.

Referring now to FIG 8, there is illustrated in the form of a sectional view a typical embodiment of the waveguide type optical module according to the present invention. As shown, the waveguide type optical module generally indicated with a reference 100 includes primarily the aforementioned temperature controller element composed of the temperature control element 1 and pedestal 5, Y-branched waveguide 12 and casing 11. The waveguide 12 is connected to an input optical fiber 9 and output optical fiber 9', for example, to multi/demultiplex the light wavelength. The waveguide 12 should advantageously be a quartz-array waveguide of which the wavelength demultiplexing characteristic varies depending upon the temperature. It should be noted that in FIG. 8, references 10 and 10' indicate fiber fixtures.

The casing 11 is of a box-shaped structure having a lead-out port through which the aforementioned input and output optical fibers 9 and 9' and lead wires 7 and 8 are led out. Inside the casing 11, the temperature control element 1 is supported in air on the pedestal 5 and the waveguide 12 is fixed in contact on the heating side surface of the temperature control element 1.

Because of such a structure of the waveguide type optical module 100, the heat homogeneously distributed over the plate surface of the temperature control element 1 can homogeneously be conducted to the waveguide 12 in a short time, whereby the heat dissipation and power consumption can considerably be reduced. Thus, the wavelength variation in the wavelength demultiplexing characteristic of the waveguide 12 can be limited to positively stabilize the wavelength demultiplexing characteristic.

Note that the optical waveguide 12 used in the present invention may be either the quartz array type waveguide or a resin-made waveguide formed from polyimide fluoride or the like. It may be a semiconductor laser. The optical waveguide 12 may be fixed on the temperature control element 1 mechanically with a screw or spring, not with an adhesive.

The present invention will be described in further detail concerning examples of the waveguide type optical module.

### Example 1 and comparative example 1:

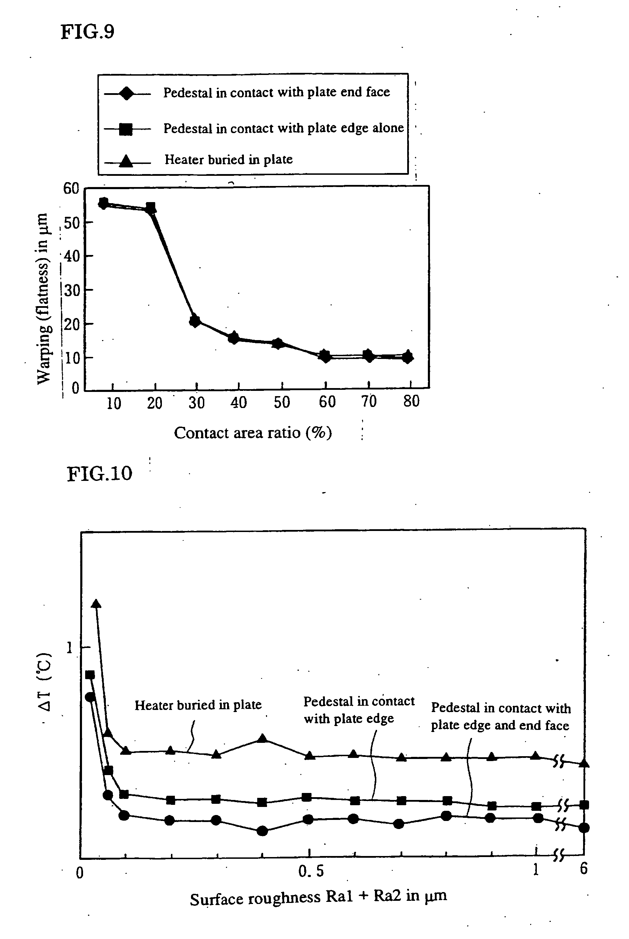

(1) There was prepared a paste formed from a mixture of aluminum nitride powder (by Tokuyama, 1.1 µm in mean particle size) in 100% by weight, yttrium oxide (Y₂O₃: yttria, 0.4 µm in mean particle size) in 4% by weight, acrylic resin binder in 11.5% by weight, dispersant in 0.5% by weight and alcohol of 1-butanol and ethanol in 53% by weight. It was dry-sprayed. Granules thus produced were filled in a mold to form a raw molding of 1.5 mm in thickness. The raw molding was sintered in a nitrogen atmosphere at a temperature of 1890°C for 3 hours under a pressure of 200 kg/m². Thereafter, the surface of the raw molding was mirror-finished by polishing with a diamond paste (0.25 µm) to a surface roughness of Ra = 0.02 µm as defined in JIS B 0601. Then the raw molding thus mirror-finished was cut into a square ceramic plate 2 (for a substrate of the temperature control element) of 0.64 mm in thickness and 50.3 mm in side length.
(2) On the non-heating side (rear side) of the ceramic plate 2 prepared as in step (1) above, there was formed a conductive paste layer for the heater 3 by screen printing. The heating pattern by the printed conductive paste was as shown in FIG. 1.
   The conductive paste used was a composition of Ag in 48% by weight, Pt in 21% by weight, SiO₂ in 1.0% by weight, B₂O₃ in 1.2% by weight, ZnO in 4.1% by weight, PbO in 3.4 % by weight, ethyl acetate in 3.4% by weight and butyl carbitol in 17.9% by weight. The conductive paste is an Ag-Pt paste in which silver particles were 4.5 µm in mean particle size and squamate and Pt particles were 0.5 µm in mean particle size and globular.
(3) After a pattern of the heater was formed from the conductive paste, the ceramic plate 2 was heated and calcinated at 780°C to sinter Ag and Pt in the conductive paste while baking the paste to the surface of the ceramic plate 2, to thereby form a resistance heater 3 (heater plate).
   Further, the portions of the rear side of the ceramic plate 2 and resistance heater 3 in contact with the pedestal 5 were polished by sand-blasting with an SiC powder containing components each having a mean particle size to a surface roughness of Ra = 0.01 to 2.5 µm as defined in JIS B 0601. The resistance heater 3 has a thickness of 5 µm and width of 2.4 mm and a sheet resistivity of 7.7 mΩ/□.
(4) The ceramic plate 2 prepared in above step (3) was immersed in an electroless nickel-plating bath filled with an aqueous solution containing 80 g/l of nickel sulfate, 24 g/l of sodium hypophosphite, 12 g/l of sodium acetate, 8 g/l of boric acid and 6 g/l of ammonium chloride to deposit a metal coating layer (nickel layer) of 1 µm in thickness on the surfaces of the silver resistance heater 3, thermistor circuit and thermistor pad.
(5) A solder paste was printed on the thermistor pad, and a thermistor was placed on the solder paste over the thermistor pad. The thermistor and thermistor pad were heated to 200°C to mount the thermistor on the thermistor pad. Further, the lead wires 7 and 8 were connected by brazing to the thermistor circuit and heater circuit to form the temperature control element 1 (ceramic heater).
(6) Next, a glass epoxy substrate (by Matsushita Electric Works, FR-4) was cut into a square piece. As shown in FIGS. 3 and 4, the epoxy resin substrate piece was countersunk by a drill to form a pedestal 5 concaved excepted for the edge thereof. Namely, the pedestal 5 has a step 5a (as the bottom of the concavity thus formed). The ceramic plate 2 will be fitted at the bottom edge and end face thereof on the step 5a of the pedestal 5. Also, the plate 2 will be put along with the heater 3 formed on the bottom of the plate 2 in the concavity (on the step 5a). By adjusting the depth and diameter of the concavity (step 5a) appropriately at the time of drilling, it is possible to adjust the area of contact between the pedestal 5 ad the plate 2 and heater 3. It should be noted that the pedestal 5 had formed therein by countersinking a lead-out port through which the lead wires 7 and 8 were to be led out. Further, the surface (abutting the plate and heater) of the step 5a of the pedestal 5 was roughened by sand-blasting with an alumina powder containing components having different diameters to Ra2 = 0.01 to 2.5 µm as defined in JIS B 0601.
(7) The plate 2 with the heater 3 was fixed by fitting to the rear side of the pedestal 5 and the diagonal corners of the pedestal 5 were fixed with a glass epoxy retainer 6 to form a temperature controller.
(8) Further, the temperature controller (pedestal 5) was fixed by bonding with a silicon resin adhesive in the box-shaped stainless steel casing 11, and a Y-branched quartz-array optical waveguide 12 was put over the temperature control element 1 and fixed with a silicon resin adhesive to the latter. Thus, a waveguide type optical module was formed.
   (a) To test the example 1 for the flatness (warping), the area of contact between the step 5a, formed by countersinking, of the pedestal 5 and ceramic plate 2 was changed from 10 to 80 % of the rear-surface area of the ceramic plate 2.
      More specifically, several types of the pedestal 5 were prepared in which the ratios in area of contact between the pedestal 5 and ceramic plate 2 with the rear-surface area of the ceramic plate 2 (will be referred to simply as "contact area ratio" hereunder) were within a range of 10 to 80 %. The flatness (warping) was measured with the ceramic plate 2 supported on each of the pedestals 5 different in contact area ratio from each other.
      In the example 1, the pedestal 5 was in contact with the ceramic plate 2 at the edge and end face of the latter (will be referred to as "edge/end face" hereunder). In addition to the pedestals which were in contact with the ceramic plate as above, there were prepared a pedestal which was in contact with the plate 2 at an inner portion of the latter (nearer to the center) and a pedestal which was in contact with the plate 2 at the edge of the. Several types of such pedestals 5 each having contact area ratios of 10 to 80 % were prepared. The flatness (warping) was measured with the ceramic plate 2 supported on each of such additional pedestals 5. The test results are shown in FIG 9.
      Note that the pedestals each having a contact area ratio of less than 30% were taken as acceptable ones while the pedestals each having a contact area ratio of more than 30% were taken as comparative ones.
   (b) Also, for determination of the homogeneity of surface temperature distribution over the ceramic plate in the example 1, the contact area ratio was fixed at 80% for the pedestals in contact with the plate 2 in three different manners and the sum of surface roughness (Ra1 + Ra2) was changed variously. The homogeneity of plate-surface temperature distribution is represented by a difference ΔT between the highest and lowest temperatures when the contact area ratio was set to 80%. The temperature measurement used a thermo-viewer. The test results are shown in FIG. 10.

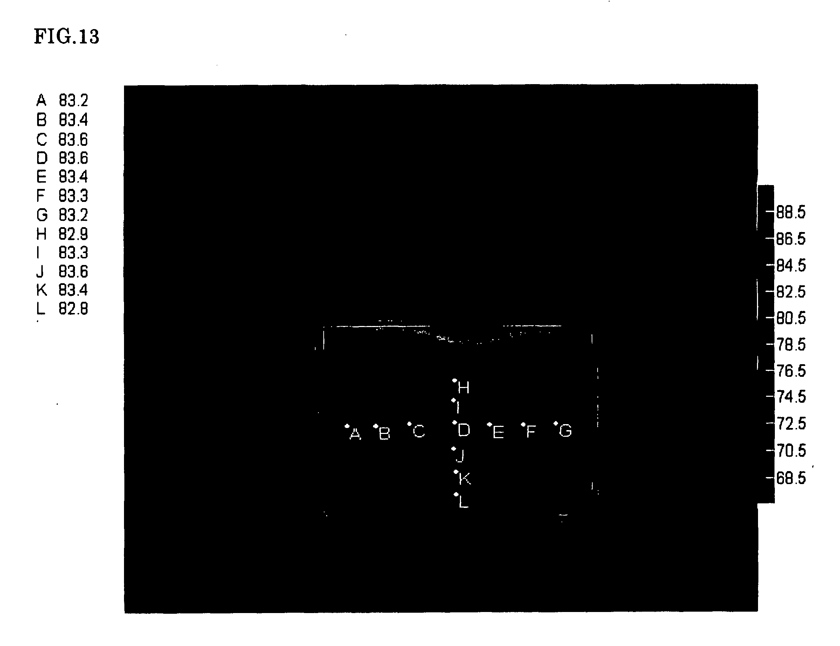

Note that FIG 13 shows a photo taken of the temperature distribution on the ceramic plate by the thermo-viewer with the temperature set to 80°C. The red frame in the photo indicates an area where the temperature control element is disposed. The temperature difference in this area was observed to be small (ΔT < 1°C).

### Example 2 and comparative example 2:

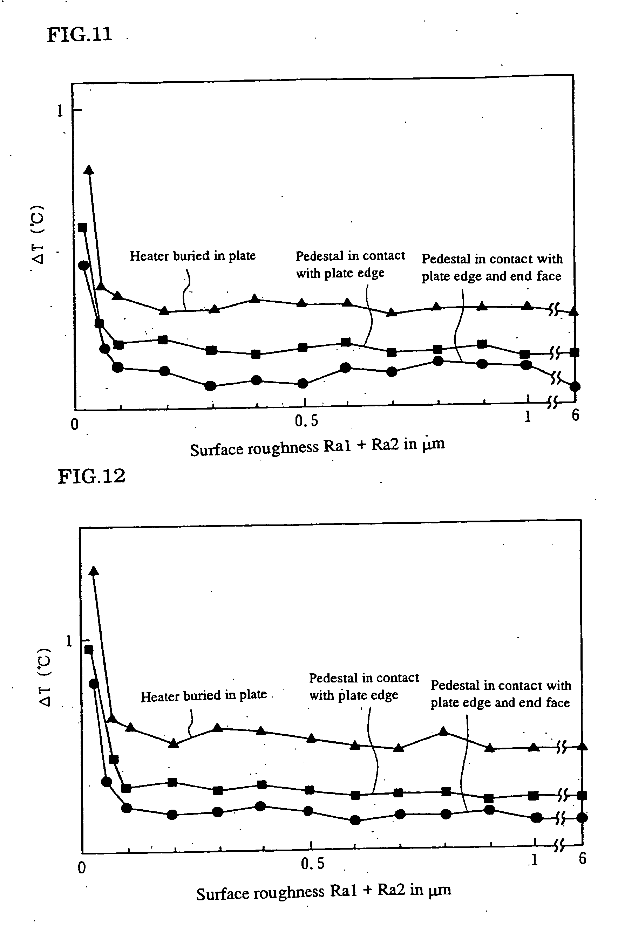

The example 2 was tested under basically same conditions as in the testing on the example 1 except that the plate was cooled by a Peltier-effect element fixed with an epoxy resin adhesive to the plate (namely, not heated by the heater 3). In this example 2, the homogeneity of plate-surface temperature distribution is represented by the difference ΔT between highest and lowest temperatures measured with the thermo-viewer set to 5°C. The test results are shown in FIG. 11.

### Example 3 and comparative example 3:

The example 3 was tested under basically same conditions as in the testing on the example 1 except that the raw molding was formed from silicone carbide, not from the aluminum nitride. More specifically, a paste was prepared from a mixture of silicon carbide (by Yakushima Electric, 1.1 µm in mean particle size) in 100% by weight, B₄C (1 µm in mean particle size) in 4% by weight, acrylic resin binder in 11.5% by weight, dispersant in 0.5% by weight and alcohol containing 1-buthanol and ethanol in 53% by weight. It was molded by the doctor blade method to form a plurality of raw moldings of 0.47 mm in thickness. Next, the raw moldings were dried at 80°C for 5 hours, and were punched to form a portion which would be a lead-out port through which connection is to be made external terminals.

Then, a conductive paste formed from a mixture of tungsten carbide particles of 1.1 µm in mean particle size in 100% by weight, acrylic resin binder in 3.0% by weight, α-terpineol solvent in 3.5% by weight and dispersant in 0.3% by weight was filled in the punched portion for the lead-out port in the raw moldings to form a conductive paste layer. Further, a glass paste was applied to the raw molding and then a conductive paste was printed over the glass paste to form a wiring pattern and a pad on which a heater 3 and thermistor were to be mounted.

Next, the raw moldings were stacked one on another. The stack was sintered in a nitrogen atmosphere at 1980°C under a pressure of 200 kg/cm² to form a ceramic plate 2. Further, the ceramic plate 2 was roughened by sand-blasting to a surface roughness of Ra2 = 0.01 to 2.5 µm as defined in JIS B 0601.

Then, the ceramic plate 2 was cut for the mounting pad to be exposed to outside, and a thermistor was mounted by soldering on the pad to form a temperature control element (heater plate) 1 of 1.5 mm in thickness.

A flatness (warping) similar to that in the example 1 is shown in FIG 9, and the homogeneity of plate-surface temperature distribution is shown in FIG 12.

As will be seen from the results shown in FIGS 9 to 12, when the area of contact between the pedestal 5 and temperature control element 1 (heater plate) is over 30%, the flatness (warping) can be reduced to less than 50 µm. Thus, the waveguide 12 will not be inclined, and so, there will not be caused any misalignment of the optical axis with the input and output optical fibers and no propagation loss of light will occur. On the other hand, it was found that when the sum (Ra1 + Ra2) is over 0.05 µm, the difference ΔT will suddenly decrease. Our estimated reason is such that the contact between the pedestal 5 and heater plate is an assembly of point contacts, which will block the heat conduction. The test results also showed that the heater plate should desirably be in contact at the edge thereof with the pedestal 5. Our estimated reason for this respect is such that when the heater plate is in contact with the pedestal 5 in the area where the heater is formed, the difference ΔT will be greater.

### Example 4:

The example 4 was tested under similar conditions to those in the testing on the example 1 except that the plate was applied with silicone resin, not roughened by sand-blasting, and fitted in the pedestal 5. The test was started after the silicone resin became dry. The silicone resin layer 13 was 100 µm thick, which yielded a flatness (warp) of 10 µm. With the thermo-viewer set to 80°C, the difference ΔT was observed to be 0.1°C.

### Comparative example 4:

The comparative example 4 was tested under basically same conditions as those in the testing on the example 1 except that the step 5a was formed to coincide with the patterns of the heater 3 and pad 4 when forming the step 5a by counter-sinking the pedestal 5. The area of contact between the heater plate and pedestal 5 was 100%. In the comparative example 4, the flatness (warping) was 10 µm. With the thermo-viewer set to 80°C, the difference ΔT was observed to be 2°C.

Through comparison between the results of tests on the example 4 and comparative example 4, it was known that since the area of contact between the pedestal 5 and heater plate was large, the warping was smaller and the difference ΔT would be large when the plate was not surface-roughened and no thermal insulation laid between the plate and pedestal.

### Industrial Applicability

As having been described in the foregoing, the temperature control element, and the temperature controller and waveguide type optical module, each using the temperature control element, are superior in homogeneity of the plate-surface temperature distribution of the temperature control element, have a superb optical waveguide characteristic supporting the multi-channeling, that is, having a stable wavelength demultiplexing characteristic.

## Claims

1. A temperature control element (1) including a plate (2) having a heater or heat absorber (3) provided on the non-heating side thereof or buried therein, and a pedestal (5), provided to support the plate (2) thereon, where the total area of contact between the pedestal (5) in contact with the non-heating side and the plate (2) is over 30% of the area of the non-heating side of the plate (2); and **characterized in that** the sum of surface roughness Ra1 of the pedestal (5), at a portion where it is in contact with the plate (2), and surface roughness Ra2 of the plate (2), at a portion where it is in contact with the pedestal, is over 0.05 µm.

2. The temperature control element (1) according to claim 1,**characterized in that** the pedestal(5) supports the plate(2) in contact with the edge and/or end face at the non-heating side of the plate (2).

3. The temperature control element (1) according to claim 1 or 2,**characterized in that** the plate (2) is formed from ceramics.

4. The temperature control element (1) according to any one of claims 1 to 3, **characterized in that** the pedestal (5), provided to support the plate (2) thereon in contact with the non-heating side, and plate are superposed one on the other with a thermal insulation (13) laid between them, and the sum of area of contact between the pedestal (5), and the plate (2) including the heater or heat absorber (3), and superposed on the pedestal (5) with the thermal insulation (13) laid between them, is over 30% of the area of the non-heating side of the plate (2).

5. A temperature controller including a temperature control element (1) and a pedestal (5) to support the temperature control element (1) thereon inside a casing, **characterized in that**
the temperature control element (1) is one according to any of claims 1 to 4.

6. A waveguide type optical module in which a temperature control element (1) is supported in air on a pedestal(5) inside a casing (11) and an optical waveguide (12) is mounted on
the temperature control element (1), **characterized in that**
the temperature control element (1) is one according to any of claims 1 to 4.

## Patentansprüche

1. Temperatursteuerelement (1), das eine Platte (2), die eine Heizeinrichtung oder einen Wärmeabsorber (3), die/der an der Nicht-Heizseite derselben vorhanden oder darin eingebettet ist, sowie einen Untersatz (5) enthält, der zum Tragen der Platte (2) dient, wobei die Gesamt-Kontaktfläche zwischen dem Untersatz (5), der mit der Nicht-Heizseite in Kontakt ist, und der Platte (2) mehr als 30 % der Fläche der Nicht-Heizseite der Platte (2) beträgt, und **dadurch gekennzeichnet, dass** die Summe der Oberflächenrauigkeit Ra1 des Untersatzes (5) an einem Abschnitt, an dem er in Kontakt mit der Platte (2) ist, und der Oberflächenrauhigkeit Ra2 der Platte (2) an einem Abschnitt, an dem sie in Kontakt mit dem Untersatz ist, mehr als 0,05 µm beträgt.

2. Temperatursteuerelement (1) nach Anspruch 1, **dadurch gekennzeichnet, dass** der Untersatz (5) die Platte (2) in Kontakt mit der Kante und/oder Endfläche der Nicht-Heizseite der Platte (2) trägt.

3. Temperatursteuerelement (1) nach Anspruch 1 oder 2, **dadurch gekennzeichnet, dass** die Platte (2) aus Keramik besteht.

4. Temperatursteuerelement (1) nach einem der Ansprüche 1 bis 3, **dadurch gekennzeichnet, dass** der Untersatz (5), der dazu dient, die Platte, (2) in Kontakt mit der Nicht-Heizseite zu tragen, und die Platte übereinander angeordnet sind, wobei eine Wärmeisolierung (13) zwischen sie geschichtet ist und die Summe der Kontaktfläche zwischen dem Untersatz (5) und der Platte (2) einschließlich der Heizeinrichtung oder des Wärmeabsorbers (3), die über dem Untersatz (5) mit der zwischen sie geschichteten Wärmeisolierung (13) angeordnet ist, mehr als 30 % der Fläche der Nicht-Heizseite der Platte (2) beträgt.

5. Temperatursteuervorrichtung, die ein Temperatursteuerelement (1) und einen Untersatz (5) zum Tragen des Temperatursteuerelementes (1) im Inneren eines Gehäuses enthält, **dadurch gekennzeichnet, dass**
das Temperatursteuerelement (1) den Ansprüchen 1 bis 4 entspricht.

6. Wellenleiter-Optikmodul, bei dem ein Temperatursteuerelement (1) in Luft auf einem Untersatz (5) im Inneren eines Gehäuses (11) getragen wird und ein Lichtwellenleiter (12) an dem Temperatursteuerelement (1) angebracht ist, **dadurch gekennzeichnet, dass** das Temperatursteuerelement (1) einem der Ansprüche 1 bis 4 entspricht.

## Revendications

1. Élément de régulation de température (1) incluant une plaque (2) comportant un élément chauffant ou un absorbeur de chaleur (3) disposé sur son côté non chauffant ou enfoui à l'intérieur, et un socle (5) prévu pour soutenir la plaque (2) sur celui-ci, où la surface de contact totale entre le socle (5) en contact avec le côté non chauffant et la plaque (2) est supérieure à 30 % de la surface du côté non chauffant de la plaque (2) ; et **caractérisé en ce que** la somme de la rugosité de surface Ra1 du socle (5), dans une partie où il est en contact avec la plaque (2), et la rugosité de surface Ra2 de la plaque (2), dans une portion où il est en contact avec le socle, est supérieure à 0,05 µm.

2. Élément de régulation de température (1) selon la revendication 1, **caractérisé en ce que** le socle (5) soutient la plaque (2) en contact avec le bord et/ou la face d'extrémité du côté non chauffant de la plaque (2).

3. Élément de régulation de température (1) selon la revendication 1 ou 2, **caractérisé en ce que** la plaque (2) est formée de céramique.

4. Élément de régulation de température (1) selon l'une quelconque des revendications 1 à 3, **caractérisé en ce que** le socle (5), prévu pour soutenir la plaque (2) sur celui-ci en contact avec le côté non chauffant, et la plaque sont superposés l'un au-dessus de l'autre avec une isolation thermique (13) déposée entre eux, et la somme de la surface de contact entre le socle (5) et la plaque (2) incluant l'élément chauffant ou l'absorbeur de chaleur (3), et superposée sur le socle (5) avec une isolation thermique (13) déposée entre eux, est supérieure à 30 % de la surface du côté non chauffant de la plaque (2).

5. Régulateur de température incluant un élément de régulation de température (1) et un socle (5) pour soutenir l'élément de régulation de température (1) sur celui-ci à l'intérieur d'un boîtier, **caractérisé en ce que**
l'élément de régulation de température (1) est un élément selon l'une quelconque des revendications 1 à 4.

6. Module optique de type guide d'ondes dans lequel un élément de régulation de température (1) est soutenu dans l'air sur un socle (5) à l'intérieur d'un boîtier (11) et un guide d'onde optique (12) est monté sur l'élément de régulation de température (1), **caractérisé en ce que**
l'élément de régulation de température (1) est un élément selon l'une quelconque des revendications 1 à 4.
